# EUROPÄISCHE PATENTSCHRIFT

(11) **EP 1 172 271 B1**
(45) Veröffentlichungstag und Bekanntmachung des Hinweises auf die Patenterteilung: **01.12.2004**
(21) Anmeldenummer: 01110203.5
(22) Anmeldetag: 25.04.2001
(51) Int. Cl.: B60S 1/50, F01P 11/02, F01P 5/06

(54) **Einrichtung zur Speicherung von Waschwasser**
Device for storing washing liquid
Dispositif de stockage de liquide de lavage

(30) Priorität: 14.07.2000 DE 10034326
(43) Veröffentlichungstag der Anmeldung: 16.01.2002
(73) Patentinhaber: Siemens Aktiengesellschaft, 80333 München (DE)
(72) Erfinder: Kober, Rainer, 64297 Darmstadt (DE)

(56) Entgegenhaltungen:
- DE-A- 3 100 438
- DE-A- 19 508 112
- DE-C- 3 529 722
- FR-A- 2 605 955
- US-A- 3 692 004
- US-A- 4 441 463
- US-A- 5 329 889
- US-A- 5 649 587
- US-A- 5 971 062

## Beschreibung

Die Erfindung betrifft eine Einrichtung zur Speicherung von Waschwasser in einem Kraftfahrzeug mit einem zur Montage in einem Motorraum vorgesehenen Waschwasserbehälter.

Solche Einrichtungen werden in heutigen Kraftfahrzeugen eingesetzt und sind aus der Praxis bekannt.

Eine solche Einrichtung ist aus dem Dokument US-A-5971062 bekannt. Die Einrichtung weist einen Waschwasserbehälter auf, der mit einem zur Luftführung an einem Kühler vorgesehenen Trägerelement mittels Blesformen einstückig ausgebildet ist.

Der Erfindung liegt das Problem zugrunde, eine Einrichtung der eingangs genannten Art so weiterzubilden, daß sie konstruktiv besonders einfach aufgebaut ist, und sich besonders kostengünstig herstellen lässt.

Dieses Problem wird erfindungsgemäß dadurch gelöst, daß der Waschwasserbehälter mit einem zur Luftführung an einem Kühler einer Brennkraftmaschine und/oder mit einem zur Halterung eines Kühlventilators vorgesehenen Trägerelement eine bauliche Einheit bildet und zwei Schalenteile zur Bildung des Waschwasserbehälters aufweist, wobei eines der Schalenteile das Trägerelement bildet und das andere der Schlenteile an das Trägerelement angeflanscht ist.

Die Schalenteile lassen sich hierbei kostengünstig aus Kunststoff im Spritzgußverfahren oder aus Metall, z.B. Stahl, Aluminium oder Magnesium-Guß durch Ur- oder Umformen, wie Tiefziehen oder Hydroforming fertigen.

Durch diese Gestaltung kann das Trägerelement vorteilhafterweise ein Strukturelement, z.B. der Querträger, sein. Weiterhin gestaltet sich die Montage der erfindungsgemäßen Einrichtung besonders einfach, da der Waschwasserbehälter mit dem Trägerelement außerhalb des Motorenraums zu einer vormontierbaren Einheit zusammengesetzt werden kann. Die Montage der baulichen Einheit am Kraftfahrzeug erfordert hierdurch einen besonders geringen Zeitaufwand. Ein weiterer Vorteil dieser Erfindung besteht darin, daß bei in Fahrtrichtung hinter dem Kühler angeordnetem Trägerelement die Waschflüssigkeit im Waschwasserbehälter von durch den Kühler strömender Luft, sowie durch die Strahlungswärme von Kühler und Motorblock aufgewärmt wird. Hierdurch wird ein Einfrieren des Waschwassers verhindert oder eingefrorenes Waschwasser aufgetaut. Weiterhin unterstützt eine hohe Temperatur die Reinigungswirkung der Waschflüssigkeit.

Zur Verringerung der Fertigungskosten trägt es gemäß einer anderen vorteilhaften Weiterbildung der Erfindung bei, wenn eines der Schalenteile einstückig mit Halterungen zur Befestigung an dem Kühler und/oder zur Halterung des Kühlventilators gefertigt ist. Hierbei ist es von Vorteil, das den Waschwasserbehälter bildende Trägerteil mit einer das Trägerteil durchdringenden Bohrung auszubilden, durch die die vom Kühler wegströmende Luft abgeführt wird. Als günstig erweist sich dabei die Anordnung des Kühlventilators in dieser Bohrung.

Die erfindungsgemäße Einrichtung läßt sich einfach herstellen, da der Waschwasserbehälter ein topfförmiges Wandelement aufweist und das topfförmige Wandelement mit seinem Rand an dem Trägerelement angeflanscht ist. Solche Trägerelemente sind häufig als tiefgezogenes und gestanztes Blechteil oder Kunststofformteil gefertigt. Das topfförmige Wandelement könnte hierbei beispielsweise ebenfalls aus Metall oder aus Kunststoff gefertigt und mit dem Trägerelement verschweißt sein.

Der Waschwasserbehälter läßt sich gemäß einer anderen vorteilhaften Weiterbildung der Erfindung besonders kostengünstig beispielsweise aus Kunststoff fertigen, wenn die Halterungen an dem Waschwasserbehälter angeschweißt sind.

Häufig sind Waschwasserbehälter als bauliche Einheit mit einer oder mehreren Waschwasserpumpen gefertigt. Elektrische Leitungen und Schlauchleitungen lassen sich gemäß einer anderen vorteilhaften Weiterbildung der Erfindung einfach an die Waschwasserpumpe anschließen, wenn eine Waschwasserpumpe an der dem Kühler abgewandt zu montierenden Seite des Trägerelements angeordnet ist.

Die Erfindung läßt zahlreiche Ausführungsformen zu. Zur weiteren Verdeutlichung ihres Grundprinzips sind zwei davon in den Zeichnungen dargestellt und werden nachfolgend beschrieben. Diese zeigen in
- Fig.1: eine schematische Darstellung einer erfindungsgemäßen, hinter einem Kühler eines Kraftfahrzeuges montierten Einrichtung,
- Fig.2: eine Schnittdarstellung durch den Kühler und die Einrichtung aus Figur 1 entlang der Linie II - II.
- Fig.3: eine weitere Darstellung der erfindungsgemäßen Einrichtung,
- Fig.4: eine Schnittdarstellung entlang der Linie IV - IV aus Fig. 3

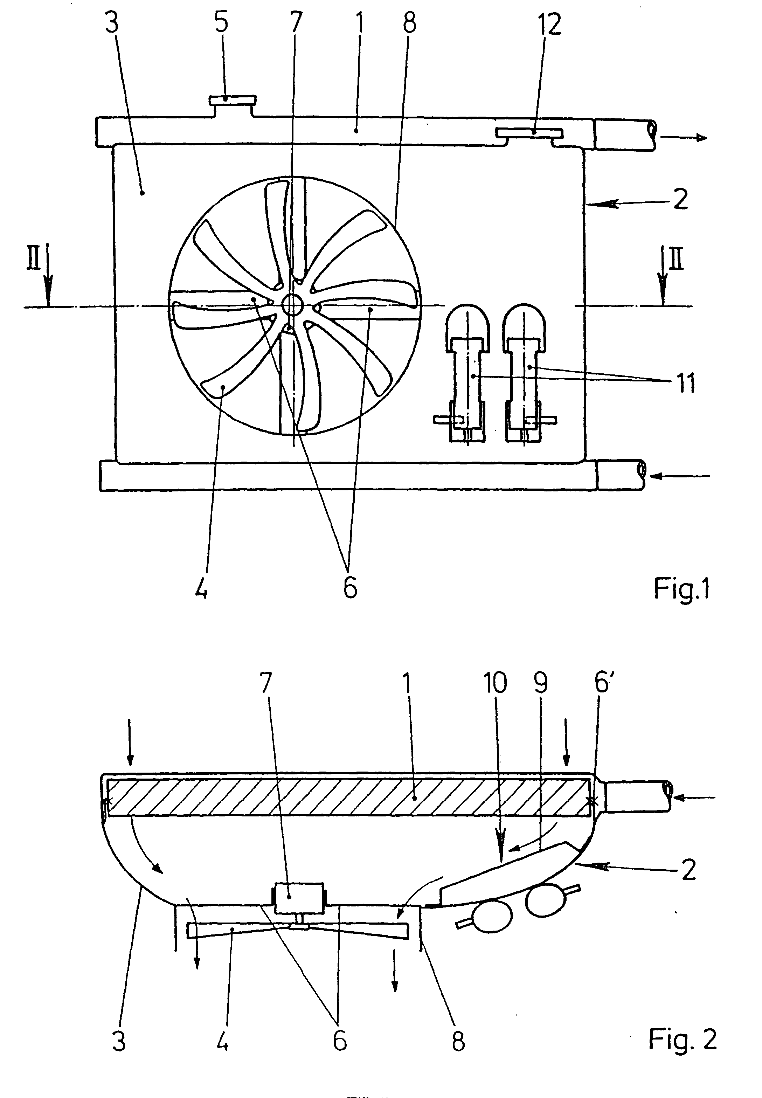

Figur 1 zeigt schematisch einen Kühler 1 für eine Brennkraftmaschine eines Kraftfahrzeuges mit einer erfindungsgemäßen Einrichtung 2. Die Einrichtung 2 hat ein an dem Kühler 1 befestigtes Trägerelement 3 zur Halterung eines Kühlventilators 4 und zur Führung von Luft von dem Kühler 1 zu dem Kühlventilator 4. Der Kühler 1 hat einen Verschluß 5 zum Nachfüllen von Kühlflüssigkeit.

Wie Figur 2 zeigt, hat das Trägerelement 3 als Stege 6 ausgebildete Halterungen für einen Elektromotor 7 des Kühlventilators 4 und einen den Kühlventilator 4 radial umschließenden Rand 8. Das Trägerelement 3 ist mittels Halterungen 6' derart an dem im Kraftfahrzeug montierten Kühler 1 befestigt, daß Fahrtwind zunächst den Kühler 1 durchströmt und anschließend zu dem Kühlventilator 4 gelangt. Zur Verdeutlichung sind in Figur 2 Strömungen des Fahrtwindes und von dem Kühlventilator 4 geförderte Luft mit Pfeilen gekennzeichnet. An seiner dem Kühler 1 zugewandten Seite des Trägerelementes 3 ist ein topfförmiges Wandelement 9 angeflanscht. Das Wandelement 9 und das Trägerelement 3 bilden einen Waschwasserbehälter 10 zur Aufnahme von Waschflüssigkeit. Auf der dem Kühler 1 abgewandten Seite des Trägerelementes 3 sind zwei Waschwasserpumpen 11, angeordnet. Eine der Waschwasserpumpen 11 dient zur Förderung von Waschflüssigkeit aus dem Waschwasserbehälter 10 zu einer Frontscheibe des Kraftfahrzeuges, während die andere zur Versorgung von vor Streuscheiben von Scheinwerfern angeordneten Waschdüsen vorgesehen ist. Figur 1 zeigt, daß der Waschwasserbehälter 10 einen Verschluß 12 zum Nachfüllen von Waschwasser hat.

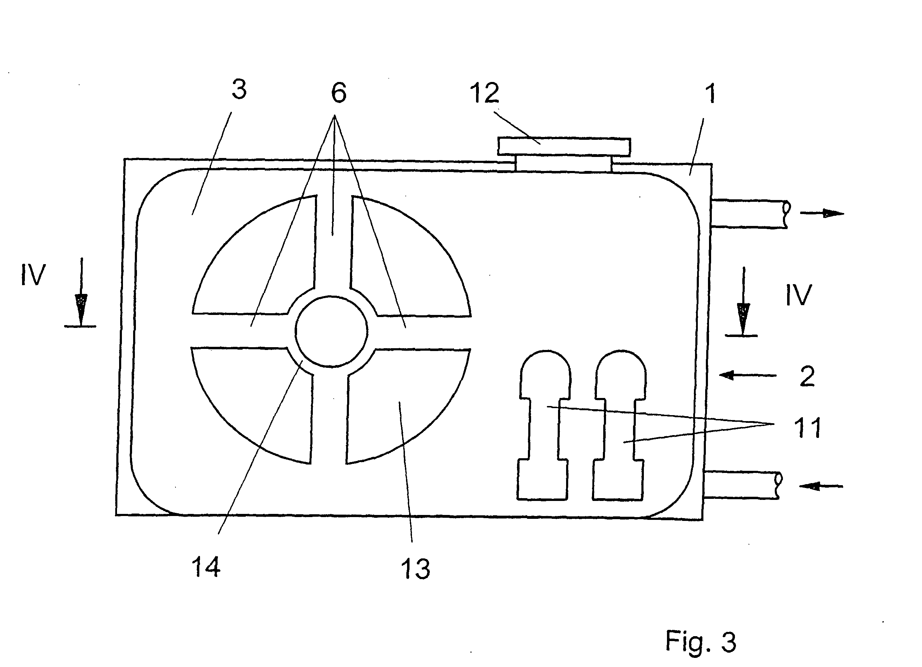

Bei der in Fig. 3 dargestellten Einrichtung bildet das Trägerelement 3 den Waschwasserbehälter. Das Trägerelement 3 weist eine das Trägerelement 3 durchdringende Bohrung 13 auf, die zum Abführen der Luft vom Kühler 1 dient. Als Stege 6 ausgebildeten Halterungen ragen in die Bohrung 13 hinein. Die Stege 6 gehen in ein Halteteil 14 über, welches ein Lager für den Elektromotor des Ventilators bildet.

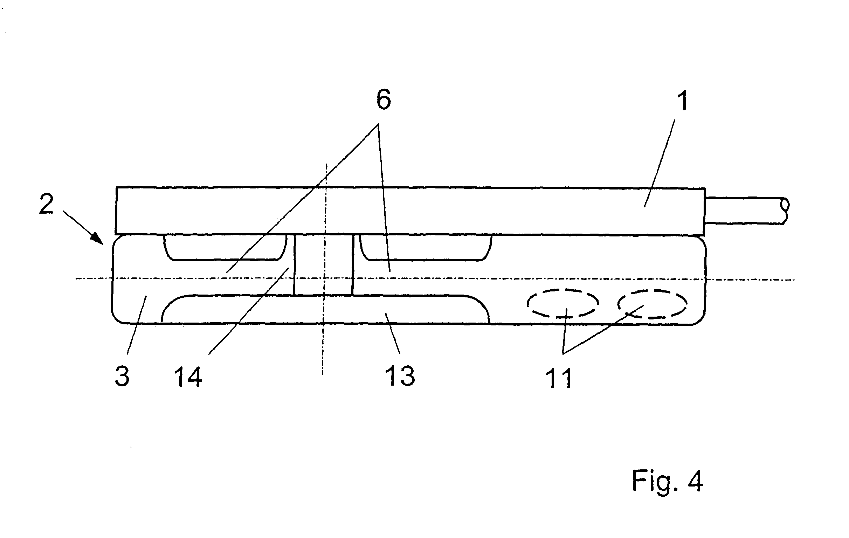

Fig. 4 zeigt das aus zwei miteinander verbundenen Halbschalen bestehende Trägerteil 3, welches mit geeigneten Mitteln mit dem Kühler 1 verbunden ist und in Fahrtrichtung hinter dem Kühler angeordnet ist.

## Patentansprüche

1. Einrichtung zur Speicherung von Waschwasser in einem Kraftfahrzeug mit einem zur Montage in einem Motorraum vorgesehenen Waschwasserbehälter (10), wobei der Waschwasserbehälter (10) mit einem zur Luftführung an einem Kühler (1) einer Brennkraftmaschine und/oder mit einem zur Halterung eines Kühlventilators (4) vorgesehenen Trägerelement (3) eine bauliche Einheit bildet, **dadurch gekennzeichnet, dass** die Einrichtung zwei Schalenteile zur Bildung des Waschwasserbehälters (10) aufweist, wobei eines der Schalenteile das Trägerelement (3) bildet und das andere der Schalenteile als topfförmiges Wandelement (9) gestaltet ist und an das Trägerelement (3) angeflanscht ist.

2. Einrichtung nach Anspruch 1, **dadurch gekennzeichnet, daß** der Waschwasserbehälter eine ihn durchdringende Bohrung (13) aufweist.

3. Einrichtung nach Anspruch 2, **dadurch gekennzeichnet, daß** in die Bohrung (13) hineinragende Stege (6) zur Halterung eines Kühlventilators (4) ausgebildet sind.

4. Einrichtung nach Anspruch 1, **dadurch gekennzeichnet, daß** eines der Schalenteile einstückig mit Halterungen (6') zur Befestigung an dem Kühler (1) und/oder zur Halterung des Kühlventilators (4) gefertigt ist.

5. Einrichtung nach zumindest einem der vorhergehenden Ansprüche, **dadurch gekennzeichnet, daß** die Halterungen (6, 6') an dem Waschwasserbehälter (10) angeschweißt oder angeformt sind.

6. Einrichtung nach zumindest einem der vorhergehenden Ansprüche, **dadurch gekennzeichnet, daß** mindestens eine Waschwasserpumpe (11) an der dem Kühler (1) abgewandt zu montierenden Seite des Trägerelements (3) angeordnet ist.

7. Einrichtung nach zumindest einem der vorhergehenden Ansprüche, **dadurch gekennzeichnet, daß** das Trägerteil (3), bzw. der Waschwasserbehälter (10) aus Kunststoff oder Metall, insbesondere Stahl, Aluminium oder Magnesium-Guß, besteht.

8. Einrichtung nach zumindest einem der vorhergehenden Ansprüche, **dadurch gekennzeichnet, daß** das Trägerteil (3), bzw, der Waschwasserbehälter (10) durch Spritzgießen, Tiefziehen oder Hydroforming erzeugt ist.

## Claims

1. Device for storing washing liquid in a motor vehicle with a washing liquid container (10) provided for mounting in an engine compartment, whereby the washing liquid container (10) forms a structural unit with a carrier element (3) provided to feed air to a radiator (1) of an internal combustion engine and/or to hold a cooling fan (4), **characterised in that** the device has two shell parts to form the washing liquid container (10), whereby one of the shell parts forms the carrier element (3) and the other of the shell parts is designed as a pot-shaped wall element (9) and is flange-mounted onto the carrier element (3).

2. Device according to claim 1, **characterised in that** the washing liquid container has a hole (13) passing through it.

3. Device according to claim 2, **characterised in that** webs (6) projecting into the hole (13) are designed to hold a cooling fan (4).

4. Device according to claim 1, **characterised in that** one of the shell parts is made in a single unit with brackets (6') for attachment to the radiator (1) and/or to hold the cooling fan (4).

5. Device according to at least one of the preceding claims, **characterised in that** the brackets (6, 6') are welded or moulded onto the washing liquid container (10).

6. Device according to at least one of the preceding claims, **characterised in that** at least one washing liquid pump (11) is disposed on the side of the carrier element (3) facing away from the radiator (1).

7. Device according to at least one of the preceding claims, **characterised in that** the carrier part (3) or the washing liquid container (10) is made of plastic or metal, in particular steel, aluminium or cast magnesium.

8. Device according to at least one of the preceding claims, **characterised in that** the carrier part (3) or the washing liquid container (10) is produced through injection moulding, deep drawing or hydroforming.

## Revendications

1. Dispositif destiné au stockage d'eau de lavage dans un véhicule automobile et comportant un réservoir d'eau de lavage (10) prévu pour être monté dans un compartiment moteur, où le réservoir d'eau de lavage (10) forme une unité constructive avec un élément support (3) prévu pour guider l'air au niveau d'un radiateur (1 ) d'un moteur à combustion et/ou pour supporter une soufflerie de refroidissement **caractérisé par le fait que** le dispositif comporte deux coques formant le réservoir d'eau de lavage (10), l'une des coques formant l'élément support (3) et l'autre coque étant conçue comme élément de paroi (9) en forme de pot et étant bridée sur l'élément support (3).

2. Dispositif selon la revendication 1 **caractérisé par le fait que** le réservoir d'eau de lavage comporte une cavité (13) qui le traverse.

3. Dispositif selon la revendication 2 **caractérisé par le fait que** des entretoises (6) qui dépassent dans la cavité (13) sont conçues pour supporter une soufflerie de refroidissement (4).

4. Dispositif selon la revendication 1 **caractérisé par le fait que** l'une des coques est fabriquée en une seule pièce avec des fixations (6') permettant la fixation sur le radiateur (1) et/ou permettant de supporter la soufflerie de refroidissement (4).

5. Dispositif selon au moins l'une des revendications précédentes **caractérisé par le fait que** les fixations (6, 6') sont soudées ou façonnées sur le réservoir d'eau de lavage (10).

6. Dispositif selon au moins l'une des revendications précédentes **caractérisé par le fait que** au moins une pompe à eau de lavage (11 ) est disposée sur le coté de l'élément support opposé au radiateur (1).

7. Dispositif selon au moins l'une des revendications précédentes **caractérisé par le fait que** la pièce support (3) et le réservoir d'eau de lavage (10) sont fabriqués en matière plastique ou en métal, notamment en acier, en aluminium ou en fonte de magnésium.

8. Dispositif selon au moins l'une des revendications précédentes **caractérisé par le fait que** la pièce porteuse (3) et le réservoir d'eau de lavage (10) sont fabriqués par moulage par injection, par emboutissage ou par hydroforming.
